# EUROPEAN PATENT APPLICATION

(11) **EP 1 746 557 A2**
(43) Date of publication of application: **24.01.2007**
(21) Application number: 06117434.8
(22) Date of filing: 18.07.2006
(51) Int. Cl.: G08C 23/04

(54) **Remote control method and remote control system using the same**

(30) Priority: 21.07.2005 KR 20050066305
(71) Applicant: Samsung Electronics Co., Ltd., Suwon-si 442-742 Gyeonggi-Do (KR)
(72) Inventor: Kim, Je-geol, Suji-gu, Yongin-si, Gyeonggi-do (KR)
(74) Representative: Robinson, Ian Michael

(57) **Abstract**

A method of remotely controlling similar types of devices (301, 302, 303), one or more of which is a controlled device (300) having the same mode as that of a control device (200) set in one of a plurality of modes, the method including receiving an input of mode information in order to convert a mode of the control device (200) into one of the plurality of modes, converting the mode of the control device (200) according to the mode information, receiving an input of information by which a function of the controlled device (300) is remotely controlled by the control device (200), generating control signals that correspond to the information according to the converted mode, transmitting the control signals to the controlled device (300), receiving an input of the mode information in order to convert a mode of the controlled device (300) into the one of the plurality of modes, converting the mode of the controlled device (300) according to the mode information, receiving the control signals, and controlling the function of the controlled device (300) according to the control signals if the received control signals are recognized as being effective in the converted mode of the controlled device (300).

## Description

The present invention relates generally to a remote control method and a remote control system, and, more particularly, to a remote control method and a remote control system, in which one or more specified controlled devices are selected from two or more controlled devices and are remotely controlled.

Conventionally, a user controls devices (controlled devices) located in a remote location by manipulating function keys of a remote control device. A remote control signal generated by the manipulation of the function keys may be used for the same kinds of electronic devices manufactured by the same manufacturer. In other words, the similar models of notebook computers manufactured by a manufacturer may be controlled by one remote control device.

Therefore, when the similar kinds of controlled devices are remotely controlled using a related art control method, the controlled devices that receive the remote control signal transmitted from the control device are operated equally by a control signal generated by the control device. For example, if a user performs a presentation using a notebook computer that can be remotely controlled, another notebook computer may operate in the same manner as the notebook computer of the user, which is a problem.

According to the present invention there is provided an apparatus and method as set forth in the appended claims. Preferred features of the invention will be apparent from the dependent claims, and the description which follows.

An aspect of the present invention has been created to solve the above-mentioned and/or other problems occurring in the related art, and to provide a remote control method and a remote control system, in which one or more specified controlled devices are selected from two or more electronic devices and are remotely controlled.

Another aspect of the present invention provides a remote control method and a remote control system, in which either a separate identifier to identify controlled devices or a memory space to store the identifier is not required.

In order to accomplish these objects, there is provided a method of remotely controlling similar types of devices, one or more of which is a controlled device having the same mode as that of a control device set in one of a plurality of modes, the method including receiving an input of mode information in order to convert a mode of the control device into one of the plurality of modes, converting the mode of the control device according to the mode information, receiving an input of information by which a function of the controlled device is remotely controlled by the control device, generating control signals that correspond to the information according to the converted mode, transmitting the control signals to the controlled device, receiving an input of the mode information in order to convert a mode of the controlled device into the one of the plurality of modes, converting the mode of the controlled device according to the mode information, receiving the control signals, and controlling the function of the controlled device according to the control signals if the received control signals are recognized as being effective in the converted mode of the controlled device.

In another aspect of the present invention, there is provided a system of remote controlling similar types of devices, one or more of which is a controlled device having a same mode as that of a control device set in one of a plurality of modes, the control device comprising a mode input unit to receive an input of mode information in order to convert a mode of the control device into one of the plurality of modes, an operation input unit to receive an input of information by which a function of the controlled device is remotely controlled by the control device, a microcomputer to convert the mode of the control device according to the mode information and to generate control signals that correspond to the information by which the function of the controlled device is controlled according to the converted mode, and a transmitter to transmit the control signals to the controlled device, and the controlled device comprising, a mode input unit to receive an input of the mode information in order to convert a mode of the controlled device into the one of the plurality of modes, a receiver to receive the control signals, a microcomputer to convert the mode of the controlled device according to the mode information and to generate operation information of the controlled device corresponding to the received control signals if the received control signals are recognized as being effective in the converted mode of the controlled device, and an operation controller to control a function of the controlled device according to the operation information.

Additional and/or other aspects and advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
Figure 1 is a view illustrating an example of a control signal generally used in a remote control method;
Figure 2 is a schematic view illustrating a remote control system according to an embodiment of the present invention;
Figure 3 is a block diagram illustrating the construction of a control device of a remote control system according to an embodiment of the present invention;
Figure 4 is a block diagram illustrating a controlled device of a remote control system according to an embodiment of the present invention;
Figure 5 is a flowchart illustrating a process of setting a mode of a control device according to an embodiment of the present invention;
Figure 6 is a flowchart illustrating a process of generating and transmitting a control signal according to a mode of a control device according to an embodiment of the present invention;
Figure 7 is a flowchart illustrating a process of setting a mode of a controlled device according to an embodiment of the present invention; and
Figure 8 is a flowchart illustrating an operation of a controlled device according to a control signal according to an embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

It will be understood that each block of the flowchart illustrations, and combinations of blocks in the flowchart illustrations to be described below, may be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, allow for an implementation of the functions specified in the flowchart block or blocks. These computer program instructions may also be stored in a computer usable or computer-readable memory that may direct a computer or other programmable data processing apparatus to function in a particular manner, such that the instructions stored in the computer usable or computer-readable memory produce an article of manufacture including instructions that implement the function specified in the flowchart block or blocks. The computer program instructions may also be loaded into a computer or other programmable data processing apparatus to cause a series of operational steps to be performed on the computer or other programmable apparatus to produce a computer implemented process such that the instructions that are executed on the computer or other programmable apparatus implement the functions specified in the flowchart block or blocks.

Further, each block of the flowchart illustrations may represent a module, segment, or a portion of code, which comprises one or more executable instructions to implement the specified logical function(s). It should also be noted that in some alternative implementations, the functions noted in the blocks may occur out of order. For example, two blocks shown in succession may in fact be executed substantially concurrently or the blocks may sometimes be executed in reverse order depending upon the functionality involved.

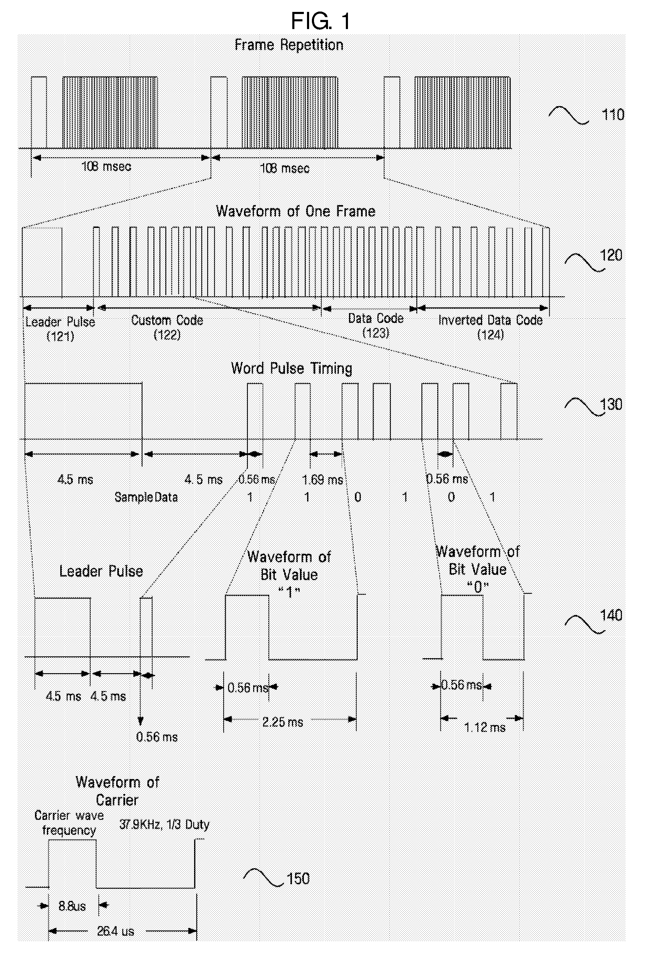

Figure 1 is a view illustrating an example of a control signal generally used in a remote control method. As shown in Figure 1, an infrared (IR) remote controller uses various kinds of IR signals. The remote control signals are IR pulses that are transmitted to a controlled device. An IR light-emitting device (LED) transmits the IR signals in the frequency range of 30 KHz to 40 KHz. This frequency range allows the controlled device to receive the transmitted signals while avoiding the problem of interference.

The IR signals that are transmitted through the IR LED are binary signals. Most electronic home appliances emit similar remote-control signals. The binary signal identifies a bit value of "0" or "1" according to the time and length of a pulse or space. There are three methods for coding binary control signals. That is, coding is performed in such a manner that the order of pulses or spaces is varied, the length of the space between pulses is varied, or the length of the pulse is varied.

In Figure 1, the bit values of "0" and "1" are identified using a method of coding control signals by varying the length of the space between the pulses.

Generally, if a user pushes a specific function key of a control device, the control device repeatedly generates control signals showing specific functions at constant intervals. A reference numeral 110 of Figure 1 shows a waveform of a control signal generated every 108 msec. Supposing that the user pushes a volume up button, the control device repeats a generation of control signals corresponding to the volume up button at an interval of 108 msec.

Reference numeral 120 of Figure 1 denotes one frame of the control signal. One frame of the control signal comprises a leader pulse 121 indicating a start of the frame, a custom code 122 indicating the kind of controlled devices, a data code 123 indicating a control function, and an inverted data code 124 to identify a corruption of the data code during a transmission of the control signal.

Reference numeral 130 of Figure 1 denotes a part of a waveform of one frame in detail. The general control signal shows the leader pulse 121, the bit value "1," and the bit value "0" according to the timing of the pulse (see 140 of Figure 1). In Figure 1, the length of the pulse indicating the bit value "1" is longer than the length of the pulse indicating the bit value "0" in order to differentiate the bit values "1" and "0."

Reference numeral 150 of Figure 1 denotes a waveform of a general carrier that carries the control signal.

The control signals generated by the control device, as shown in Figure 1, are, thus, expressed by a combination of pulses. The combination of pulses indicates a data code that controls a specific function of the controlled device. In the remote control method according to the embodiment of the present invention, the data code to remotely control a specific function using the control device is generated according to a mode. The control signals including these data codes are recognized by the controlled device in the same mode as that of the control device.

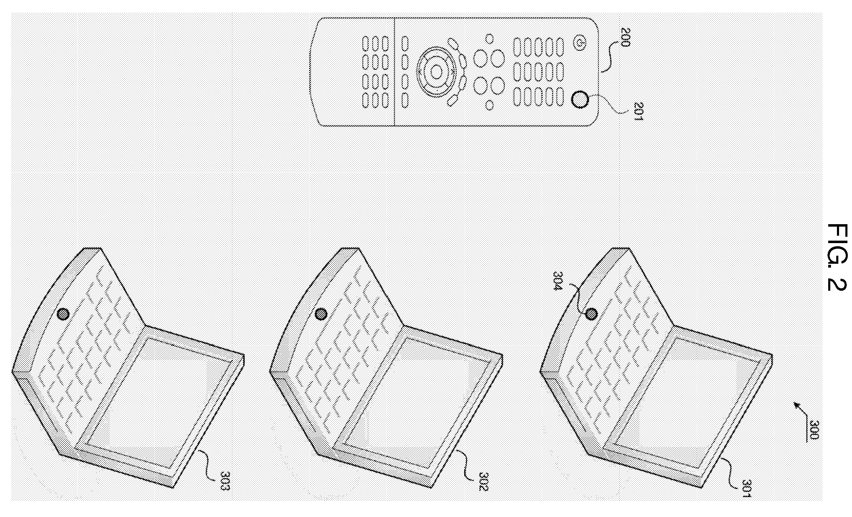

Figure 2 is a schematic view illustrating a remote control system according to an embodiment of the present invention. As shown in Figure 2, a control device 200 of the remote control system comprises a mode input button 201 that allows for a selection of two or more modes to alter the control signals. If a conventional remote controller is used as the control device, the control device generates and transmits the same control signals as those of the conventional remote controller. If the user pushes the mode input button 201 of the control device, the mode of the control device is converted from a first mode into a second mode. If the user pushes the mode input button 201 again, the mode of the control device is converted from the second mode into a third mode. The control device 200 generates different control signals per mode for the same function, and has a first mode, second mode, and additional modes, if necessary.

Here, it is assumed that data codes for each control function are generated by the first mode of the control device 200, according to an embodiment of the present invention, as shown in Table 1.

**Table 1 - Function Codes for Mode 1**

| Control Function | Data Code |
|---|---|
| Standby Mode | 00h |
| Record | 01h |
| Stop | 02h |
| Rewinding | 03h |
| Playback | 04h |
| Fast Forward | 05h |
| Replay | 06h |
| Pause | 07h |
| Skip | 08h |
| Volume+ | 09h |
| Volume- | 0Ah |
| Mute | 0Bh |
| Channel/Page+ | 0Ch |
| Channel/Page- | 0Dh |

If the user pushes the mode input button 201 one time to convert the first mode into the second mode, thereafter, different data code values for the same control function are generated as shown in Table 2.

**Table 2 - Function Codes for Mode 2**

| Control Function | Data Code |
|---|---|
| Standby Mode | 30h |
| Record | 31h |
| Stop | 32h |
| Rewind | 33h |
| Playback | 34h |
| Fast Forward | 35h |
| Replay | 36h |
| Pause | 37h |
| Skip | 38h |
| Volume+ | 39h |
| Volume- | 3Ah |
| Mute | 3Bh |
| Channel/Page+ | 3Ch |
| Channel/Page- | 3Dh |

In other words, the control device 200, according to the embodiment of the present invention, generates a data code having a value "01h" in the first mode but generates a data code having a value "31h" in the second mode if the user pushes the record button.

Meanwhile, if the user pushes the mode input button 201 once more to convert the second mode into the third mode, different data code values for the same control function are generated as shown in Table 3.

**Table 3 - Function Codes for Mode 3**

| Control Function | Data Code |
|---|---|
| Standby Mode | 50h |
| Record | 51h |
| Stop | 52h |
| Rewind | 53h |
| Playback | 54h |
| Fast Forward | 55h |
| Replay | 56h |
| Pause | 57h |
| Skip | 58h |
| Volume+ | 59h |
| Volume- | 5Ah |
| Mute | 5Bh |
| Channel/Page+ | 5Ch |
| Channel/Page- | 5Dh |

A controlled device 300 also comprises a mode input button 304 that allows the user to select the first to N-th modes. If the mode of the controlled device 300 is the N-th mode, the controlled device recognizes only the control signals generated in the N-th mode as effective signals.

For example, if the user gives a presentation using a notebook computer 301 in the presence of similar notebook computers, the mode of the control device 200 and the mode of the notebook computer 301 should both be converted into the second mode while modes of notebook computers 302 and 303 are maintained in the first mode. The control device 200 (in the second mode) transmits data codes (as shown in Table 2), and the notebook computer 301 considers the transmitted data code an effective control signal, and performs the operation corresponding to the control signal. However, since the notebook computers 302 and 303 do not consider the data codes effective data codes, the control signals transmitted by the control device 200 are ignored.

Meanwhile, the remote control method, according to the embodiment of the present invention, may also be used where one of the controlled devices is remotely controlled, and where two or more of the controlled devices are remotely controlled. Here, it is to be understood that modes of the controlled devices and the control devices are set to be the same.

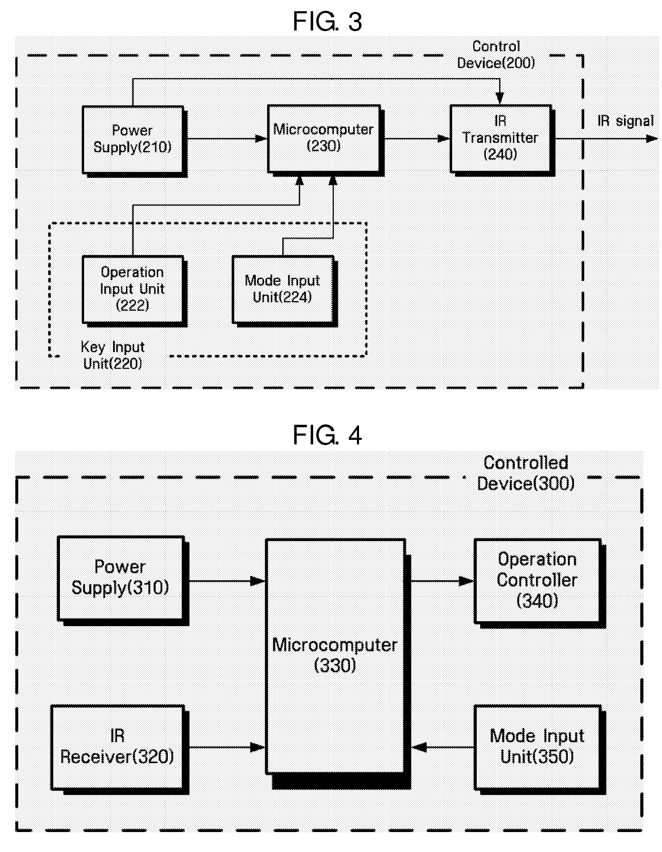

Figure 3 is a block diagram illustrating the construction of a control device of a remote control system according to an embodiment of the present invention.

The control device 200 of the remote control system comprises a power supply 210, a key input unit 220, a microcomputer 230, and an IR transmitter 240. The power supply 210 supplies the power to the microcomputer 230 and the IR transmitter 240. Using the key input unit 220, the user presses either an operation button that controls the operation of the controlled device or a mode button for mode conversion. The key input unit 220 may be divided into an operation input unit 222 and a mode input unit 224. Control functions corresponding to the operation of the controlled device, such as power, play, record, and stop are selected by the user through the operation input unit 222. The operation input unit 222 transmits information for the control functions to the microcomputer 230. The first to N-th modes are selected by the user through the mode input unit 224. The mode input unit 224 transmits the selected mode information to the microcomputer 230. The mode input unit 224 is implemented such that mode conversion of the control device is implemented in the order of the first mode, the second mode, ..., the N-th mode, and the first mode, whenever the user pushes the mode input button 201 provided on the control device, as shown in Figure 2.

The microcomputer 230 generates a control signal corresponding to information for the control function selected via the operation input unit 222 of the key input unit 220, and changes the control signal according to the mode using information on the mode selected via the mode input unit 224. The IR transmitter 240 converts the control signal transmitted from the microcomputer 230 into an IR signal, and transmits the IR signal to the controlled device.

Figure 4 is a block diagram illustrating a controlled device of a remote control system according to an embodiment of the present invention. As shown in Figure 4, the controlled device of the remote control system according to the embodiment of the present invention comprises a power supply 310, an IR receiver 320, a microcomputer 330, an operation controller 340, and a mode input unit 350.

The power supply 310 supplies power to the microcomputer 330.

The IR receiver 320 receives IR signals transmitted by the control device and converts the IR signals into corresponding digital data in order to output them to the microcomputer 330. The microcomputer 330 receives these control signals from the IR receiver 320, determines whether the controls signals are effective, and supplies the data to operate the controlled device to the operation controller 340 if the control signals are effective. The microcomputer 330 determines whether the input control signals are effective based on the mode information input by the mode input unit 350. For example, if the mode of the controlled device has been converted into the second mode by the user, the control signals are recognized as being effective only if the control signals are greater than or equal to "30h" and smaller than "40h" as shown in Figure 2. Otherwise, they are ignored.

The aforementioned respective elements of Figures 3 and 4 may indicate software or hardware such as a field-programmable gate array (FPGA) or an application-specific integrated circuit (ASIC). The elements may reside in an addressable storage medium and may implement one or more processors. Functions provided in the elements may be realized by sub-elements. A specific function may be performed by a combination of the elements. Also, the elements may be provided to implement one or more computers in a system.

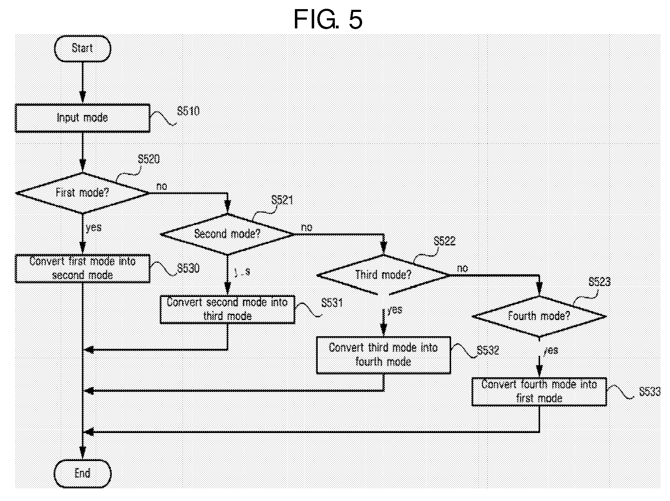

Figure 5 is a flowchart illustrating a process of setting a mode of a control device (i.e., the control device 200 of Figure 2) according to an embodiment of the present invention. As shown in Figure 5, the user first pushes the mode input button 510. Then, if the current mode is the first mode 520, the control device converts to the second mode 530. If the current mode is the second mode 521, the control device converts from the second mode to the third mode 531. In general, then, it may be said that the control device converts from the (N-1)-th mode into the N-th mode if the current mode is the (N-1)-th mode. The control device may also restore the N-th mode to the first mode 533 if the current mode is the N-th mode 523.

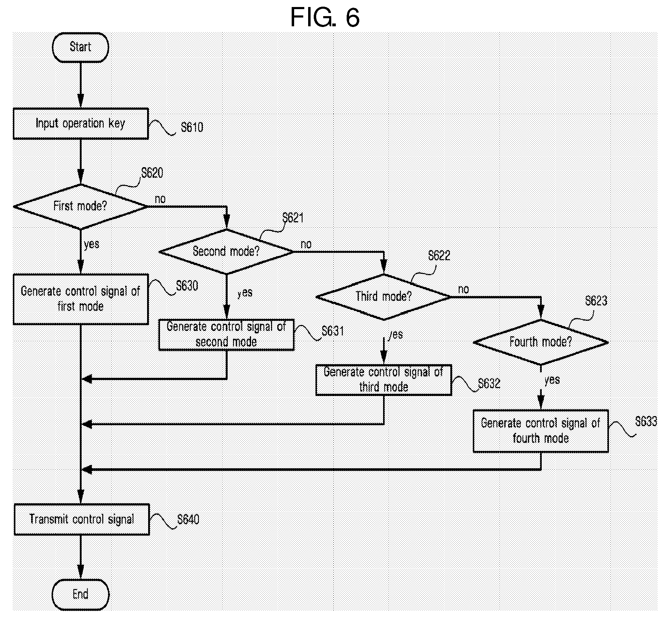

Figure 6 is a flowchart illustrating a process of generating and transmitting a control signal according to a mode of a control device according to an embodiment of the present invention. As shown in Figure 6, if the user pushes an operation key on the control device 610, the control device determines which mode is currently in effect with respect to the control device. If the control device is in the first mode 620, the control device generates the original control signal corresponding to the operation key as shown in Table 1 630. Meanwhile, if the control device is in the second mode 621, the control device generates a control signal that is different from that of the first mode as shown in Table 2 631. In this way, if the control device is in the N-th mode, the control device generates different control signals for the same operation key.

In more detail, if the user pushes a record button on the control device, the control device determines a mode status thereof. If the control device is in the first mode, the control device generates the control signal corresponding to the original record function, i.e., a code value "01h" of the record function as shown in Table 1. Meanwhile, if the control device is in the second mode when the user pushes the mode input button, the control device generates a code value "31h" of the record function as shown in Table 2.

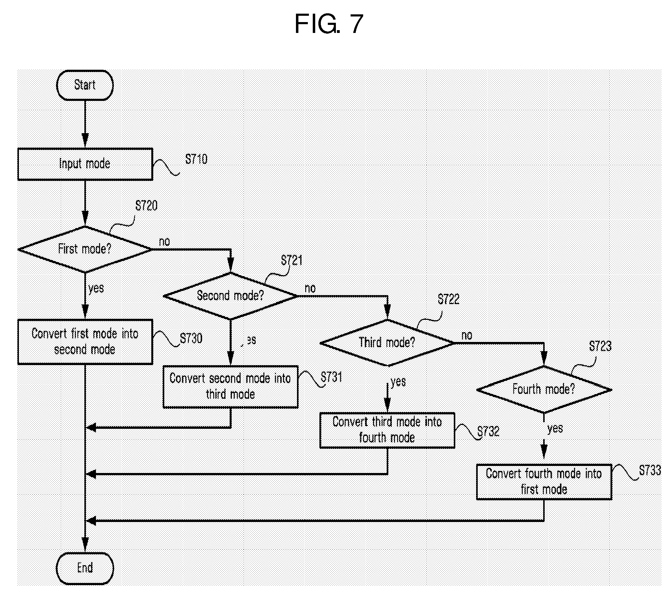

Figure 7 is a flowchart illustrating a process of setting a mode of a controlled device according to an embodiment of the present invention. As shown in Figure 7, the controlled device 300, according to an embodiment of the present invention, allows the user to convert the mode by pushing the mode input button 304. The user pushes the mode input button 710. Then, the controlled device converts the mode of the controlled device from the first mode into the second mode 730 if the current mode is the first mode 720, and/or the second mode into the third mode 731 if the current mode is the second mode 721. Generally, it may be said that the controlled device converts the mode of the controlled device from the (N-1)-th mode into the N-th mode if the current mode is the (N-1)-th mode. Supposing that the controlled device supports first to N-th modes, the controlled device restores the N-th mode to the first mode 733 if the current mode is the N-th mode 723.

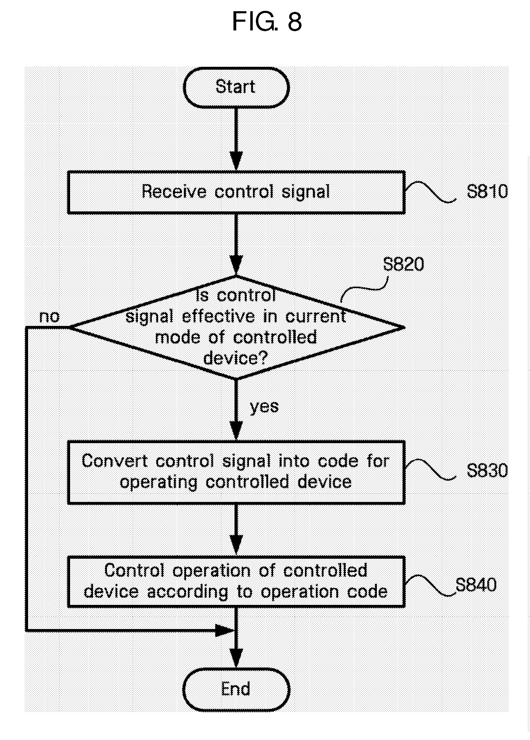

Figure 8 is a flowchart illustrating an operation of a controlled device according to a control signal according to an embodiment of the present invention. As shown in Figure 8, if the controlled device receives the control signal from the control device 810, the controlled device determines whether the control signal is an effective control signal of the corresponding mode 820. Specifically, the controlled device determines whether the received control signal is a value between "00h" and "0Ah" if a mode thereof is the first mode. The controlled device determines whether the received control signal is a value between "30h" and "3Ah" if a mode thereof is the second mode. Also, the controlled device determines whether the received control signal is a value between "50h" and "5Ah" if a mode thereof is the third mode.

If the control signal is an effective signal, the controlled device converts the received control signal into a code to operate the controlled device 830, and operates according to the operation code 840.

Of course, it is understood that the above-mentioned methods may be embodied by a computer readable medium on which a program is stored to execute the methods. Such a computer readable medium may be a hard disk, an optical disk (i.e., blu-ray, HD-DVD), etc., or a combination thereof.

As is described above, the remote control method and the remote control system according to aspects of the present invention have the following advantages. First, since the mode of the control device is set to be the same mode as that of the controlled device, one or more controlled devices are selected from two or more similar kinds of controlled devices, and can be remotely controlled. In addition, since some of the same kinds of controlled devices can be remotely controlled by a simple mode manipulation, it is not necessary to manage separate information to identify the controlled devices. Therefore, an additional memory to store this information is not required.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of remotely controlling similar types of devices (301, 302, 303), one or more of which is a controlled device (300) having the same mode as that of a control device (200) set in one of a plurality of modes, the method comprising:
the control device (200) receiving an input of mode information in order to convert a mode of the control device (200) into one of the plurality of modes;
the control device (200) converting the mode of the control device (200) according to the mode information;
the control device (200) receiving an input of information by which a function of the controlled device (300) is remotely controlled by the control device (200);
the control device (200) generating control signals that correspond to the information according to the converted mode;
the control device (200) transmitting the control signals to the controlled device (300);
the controlled device (300) receiving an input of the mode information in order to convert a mode of the controlled device (300) into the one of the plurality of modes;
the controlled device (300) converting the mode of the controlled device (300) according to the mode information;
the controlled device (300) receiving the control signals; and
controlling the function of the controlled device (300) according to the control signals if the received control signals are recognized as being effective in the converted mode of the controlled device (300).

2. The method according to claim 1, wherein the receiving of the input comprises pushing a mode conversion button (201).

3. The method according to claim 2, wherein the converting of the mode of the control device (200) comprises converting the mode of the control device (200) from a first mode into a second mode when the mode conversion button (201) is pushed.

4. The method according to claim 1, 2 or 3, wherein the generating of the control signals comprises generating the control signals according to a previously defined rule for the converted mode.

5. The method according to any of claims 1 to 4, wherein the transmitting of the control signals comprises converting the control signals into infrared (IR) signals, and transmitting the IR signals to the controlled device (300).

6. The method according to any of claims 1 to 5, wherein the receiving of the input of the mode information in order to convert the current mode of the controlled device (300) into the one of the plurality of modes comprises pushing a mode conversion button (201).

7. A recording medium on which a computer-readable program is recorded thereon to perform the method of any of claims 1 to 6.

8. A system of remote controlling similar types of devices (301, 302, 303), one or more of which is a controlled device (300) having a same mode as that of a control device (200) set in one of a plurality of modes, the control device (200) comprising:
a mode input unit (224) to receive an input of mode information in order to convert a mode of the control device (200) into one of the plurality of modes;
an operation input unit (222) to receive an input of information by which a function of the controlled device (300) is remotely controlled by the control device (200);
a microcomputer (230) to convert the mode of the control device (200) according to the mode information and to generate control signals that correspond to the information by which the function of the controlled device (300) is controlled according to the converted mode; and
a transmitter (240) to transmit the control signals to the controlled device (300), and the controlled device (300) comprising:
a mode input unit (350) to receive an input of the mode information in order to convert a mode of the controlled device (300) into the one of the plurality of modes;
a receiver (320) to receive the control signals;
a microcomputer (330) to convert the mode of the controlled device (300) according to the mode information and to generate operation information of the controlled device (300) corresponding to the received control signals if the received control signals are recognized as being effective in the converted mode of the controlled device (300); and
an operation controller (340) to control a function of the controlled device (300) according to the operation information.

9. The system according to claim 8, wherein the control device (200) further comprises a power supply (210) to supply the power to the microcomputer (330) and the transmitter (240).

10. The system according to claim 8 or 9, wherein the mode input unit (224) of the control device (200) receives the mode information when a mode conversion button (201) is pushed.

11. The system according to claim 8, 9 or 10, wherein the microcomputer (230) of the control device (200) converts the mode of the control device (200) from a first mode into a second mode when the mode conversion button (201) is pushed.

12. The system according to claim 8, 9, 10 or 11, wherein the microcomputer (330) of the control device (200) generates the control signals according to a previously defined rule for the converted mode.

13. The system according to any of claims 8 to 12, wherein the transmitter (240) of the control device (200) converts the control signals into infrared (IR) signals and transmits the IR signals to the controlled device (300).

14. The system according to any of claims 8 to 13, wherein the mode input unit (350) of the controlled device (300) receives the mode information due to the mode conversion button (201) being pushed.

15. The system according to any of claims 8 to 14, wherein the microcomputer (330) of the controlled device (300) converts the mode of the controlled device (300) from a first mode into a second mode when the mode conversion button (201) is pushed.

16. A method of controlling a control device (200), set in one of a plurality of modes, to control similar devices, one or more of which is a controlled device (300), the method comprising:
receiving an input of mode information in order to convert a mode of the control device (200) into one of the plurality of modes;
converting the mode of the control device (200) according to the mode information;
receiving an input of information by which a function of the controlled device (300) is remotely controlled by the control device (200); and
generating control signals that correspond to the information according to the converted mode.

17. A method of controlling a controlled device (300) from among similar devices with a remote control device (200) set in one of a plurality of modes, the method comprising:;
receiving an input of the mode information in order to convert the current mode of the controlled device (300) into the one of the plurality of modes corresponding to a mode of the control device (200);
converting the mode of the controlled device (300) according to the mode information;
receiving control signals transmitted from the control device (200); and
controlling the function of the controlled device (300) according to the control signals if the received control signals are recognized as being effective in the converted mode of the controlled device (300).

18. A remote control device (200) set in one of a plurality of modes to control similar types of devices (301, 302, 303), one or more of which is a controlled device (300), the control device (200) comprising:
a mode input unit (350) to receive an input of mode information in order to convert a mode of the control device (200) into one of the plurality of modes;
an operation input unit (222) to receive an input of information by which a function of the controlled device (300) is remotely controlled by the control device (200); and
a microcomputer (330) to convert the mode of the control device (200) according to the mode information and to generate control signals that correspond to the information by which the function of the controlled device (300) is controlled according to the converted mode.

19. A remotely controlled device (300) among similar types of devices (301, 302, 303) to be controlled by a control device (200) set in one of a plurality of modes, the controlled device (300) comprising:
a mode input unit (224) to receive an input of the mode information in order to convert a mode of the controlled device (300) into the one of the plurality of modes that corresponds to a mode of the control device (200);
a receiver (320) to receive control signals from the control device (200);
a microcomputer (330) to convert the mode of the controlled device (300) according to the mode information and to generate operation information of the controlled device (300) corresponding to the received control signals if the received control signals are recognized as being effective in the converted mode of the controlled device (300); and
an operation controller (340) to control a function of the controlled device (300) according to the operation information.
